**Europäisches Patentamt**

**European Patent Office**

**Office européen des brevets**

(19)

(11) Veröffentlichungsnummer : **0 374 672 B1**

## (12) EUROPÄISCHE PATENTSCHRIFT

(45) Veröffentlichungstag der Patentschrift :
**10.03.93 Patentblatt 93/10**

(51) Int. Cl.$^5$ : **C09K 7/06**

(21) Anmeldenummer : **89122820.7**

(22) Anmeldetag : **11.12.89**

(54) **Verwendung ausgewählter Esteröle in Bohrspülungen insbesondere zur off-shore-Erschliessung von Erdöl- bzw. Erdgasvorkommen (II).**

Verbunden mit 90901766.7/0448646 (europäische Anmeldenummer/Veröffentlichungsnummer) durch Entscheidung vom 21.01.92.

(30) Priorität : **19.12.88 DE 3842703**

(43) Veröffentlichungstag der Anmeldung :
**27.06.90 Patentblatt 90/26**

(45) Bekanntmachung des Hinweises auf die Patenterteilung :
**10.03.93 Patentblatt 93/10**

(84) Benannte Vertragsstaaten :
**AT BE CH DE ES FR GB GR IT LI LU NL SE**

(56) Entgegenhaltungen :
**US-A- 4 631 136**

(73) Patentinhaber : **Henkel Kommanditgesellschaft auf Aktien Henkelstrasse 67 W-4000 Düsseldorf 13 (DE)**
Patentinhaber : **Baroid Drilling Fluids, Inc. 3000 North Sam Houston Parkway East Houston, Texas (US)**

(72) Erfinder : **Müller, Heinz Goldregenweg 4 W-4019 Monheim (DE)**
Erfinder : **Herold, Claus-Peter, Dr. Ostpreussenstrasse 26 W-4020 Mettmann (DE)**
Erfinder : **von Tapavicza, Stephan, Dr. Thomas-Mann-Strasse 12 W-4006 Erkrath 2 (DE)**
Erfinder : **Grimes, Douglas John 12 Ledborough Lane Beaconsfield HP9 2PZ (GB)**
Erfinder : **Braun, Jean-Marc Bernstorffstrasse 34 E W-3100 Celle (DE)**
Erfinder : **Smith, Stuart P.T. Creag Ghlaf Drumoak Banchory Kincardineshire (GB)**

(74) Vertreter : **von Kreisler, Alek, Dipl.-Chem. et al Patentanwälte Von Kreisler-Selting-Werner, Deichmannhaus am Hauptbahnhof W-5000 Köln 1 (DE)**

## Beschreibung

Verwendung ausgewählter Esteröle in Bohrspülungen insbesondere zur off-shore-Erschließung von Erdöl- bzw. Erdgasvorkommen (II)

Die Erfindung beschreibt neue Bohrspülflüssigkeiten auf Basis von Esterölen und darauf aufgebaute Invert-Bohrspülschlämme, die sich durch hohe ökologische Verträglichkeit bei gleichzeitig guten Stand- und Gebrauchseigenschaften auszeichnen. Ein wichtiges Einsatzgebiet für die neuen Bohrspülsysteme sind off-shore-Bohrungen zur Erschließung von Erdöl- und/oder Erdgasvorkommen, wobei es hier die Erfindung insbesondere darauf abstellt, technisch brauchbare Bohrspülungen mit hoher ökologischer Verträglichkeit zur Verfügung zu stellen. Der Einsatz der neuen Bohrspülsysteme hat besondere Bedeutung im marinen Bereich, ist aber nicht darauf eingeschränkt. Die neuen Spülsysteme können ganz allgemeine Verwendung auch bei landgestützten Bohrungen finden, beispielsweise beim Geothermiebohren, beim Wasserbohren, bei der Durchführung geowissenschaftlicher Bohrungen und bei Bohrungen im Bergbaubereich. Grundsätzlich gilt auch hier, daß durch die erfindungsgemäß ausgewählten Bohrölflüssigkeiten auf Esterbasis der ökotoxische Problembereich substantiell vereinfacht wird.

Flüssige Spülsysteme zur Niederbringung von Gesteinsbohrungen unter Aufbringen des abgelösten Bohrkleins sind bekanntlich beschränkt eingedickte fließfähige Systeme auf Wasserbasis oder auf Ölbasis. Diese zuletzt genannten Systeme auf Ölbasis finden in der Praxis zunehmende Bedeutung und hier insbesondere im Bereich der off-shore-Bohrungen oder beim Durchteufen wasserempfindlicher Schichten.

Bohrspülungen auf Ölbasis werden im allgemeinen als sogenannte Invert-Emulsionsschlämme eingesetzt, die aus einem Dreiphasensystem bestehen: Öl, Wasser und feinteilige Feststoffe. Es handelt sich dabei um Zubereitungen vom Typ der W/O-Emulsionen, d. h. die wäßrige Phase ist heterogen fein-dispers in der geschlossenen Ölphase verteilt. Zur Stabilisierung des Gesamtsystems und zur Einstellung der gewünschten Gebrauchseigenschaften ist eine Mehrzahl von Zusatzstoffen vorgesehen, insbesondere Emulgatoren bzw. Emulgatorsysteme, Beschwerungsmittel, fluid-loss-Additive, Alkalireserven, Viskositätsregler und dergleichen. Zu Einzelheiten wird beispielsweise verwiesen auf die Veröffentlichung P. A. Boyd et al. "New Base Oil Used in Low-Toxicity Oil Muds" Journal of Petroleum Technology, 1985, 137 bis 142 sowie R. B. Bennett "New Drilling Fluid Technology - Mineral Oil Mud" Journal of Petroleum Technology, 1984, 975 bis 981 sowie die darin zitierte Literatur.

Öl-basierte Bohrspülungen waren zunächst aufgebaut auf Dieselölfraktionen mit einem Gehalt an Aromaten. Zur Entgiftung und Verminderung der damit geschaffenen ökologischen Problematik ist dann vorgeschlagen worden, weitgehend aromatenfreie Kohlenwasserstofffraktionen - heute auch als "nonpolluting oils" bezeichnet - als geschlossene Ölphase einzusetzen, siehe hierzu die zuvor zitierte Literatur. Wenn auf diese Weise auch durch den Ausschluß der aromatischen Verbindungen gewisse Fortschritte erreicht worden sind, so erscheint eine weitere Minderung der Umweltproblematik - ausgelöst durch Bohrspülflüssigkeiten der hier betroffenen Art - dringend erforderlich. Gültigkeit hat das insbesondere beim Niederbringen von off-shore-Bohrungen zur Erschließung von Erdöl- bzw. Erdgasvorkommen, weil das marine Ökosystem besonders empfindlich auf das Einbringen von toxischen und schwer abbaubaren Substanzen reagiert.

Die einschlägige Technologie hat seit einiger Zeit die Bedeutung von Ölphasen auf Esterbasis zur Lösung dieser Problematik erkannt. So beschreiben die US-Patentschriften 4,374,737 und 4,481,121 ölbasierte Bohrspülflüssigkeiten, in denen nonpolluting oils Verwendung finden sollen. Als nonpolluting oils werden nebeneinander und gleichwertig aromatenfreie Mineralölfraktionen und Pflanzenöle von der Art Erdnußöl, Sojabohnenöl, Leinsamenöl, Maisöl, Reisöl oder auch Öle tierischen Ursprungs wie Walöl genannt. Durchweg handelt es sich bei den hier genannten Esterölen pflanzlichen und tierischen Ursprungs um Triglyceride natürlicher Fettsäuren, die bekanntlich eine hohe Umweltverträglichkeit besitzen und gegenüber Kohlenwasserstofffraktionen auch wenn diese aromatenfrei sind - aus ökologischen Überlegungen deutliche Überlegenheit besitzen.

Interessanterweise schildert dann aber kein Beispiel der genannten US-Patentschriften die Verwendung solcher natürlicher Esteröle in Invert-Bohrspülungen der hier betroffenen Art. Durchweg werden Mineralölfraktionen als geschlossene Ölphase eingesetzt.

Die der Erfindung zugrunde liegenden Untersuchungen haben gezeigt, daß der im Stand der Technik erwogene Einsatz von leicht abbaubaren Ölen pflanzlichen und/oder tierischen Ursprungs aus praktischen Gründen nicht in Betracht kommen kann. Die rheologischen Eigenschaften solcher Ölphasen sind für den breiten in der Praxis geforderten Temperaturbereich von 0 bis 5 °C einerseits bis zu 250 °C und darüber andererseits nicht in den Griff zu bekommen.

Die Lehre der US-PS 4,481,121 erwähnt in ihrem allgemeinen Beschreibungsteil als brauchbare Ölphase neben den Triglyceriden auch ein Handelsprodukt "Arizona 208" der Fa. Arizona Chemical Company, Wayne, N.J., bei dem es sich um einen gereinigten Isooctyl-Monoalkohol-Ester hochreiner Tallölfettsäuren handelt. Ein hier erstmalig genannter Ester aus einem monofunktionellen Alkohol und monofunktionellen Carbonsäuren wird als gleichwertig mit Triglyceriden natürlichen Ursprungs und/oder aromatenfreien Kohlenwasserstofffraktionen dargestellt.

Irgendwelche nacharbeitbaren Beispiele zum Einsatz eines solchen Esters aus monofunktionellen Komponenten finden sich in der genannten US-Patentschrift nicht.

Die Lehre der nachfolgend geschilderten Erfindung geht von der Erkenntnis aus, daß es tatsächlich möglich ist, ölbasische Invert-Spülungen der hier betroffenen Art auf Basis von Esterölen hoher Umweltverträglichkeit herzustellen, die in ihrem Lager und Einsatzverhalten den besten bisher bekannten ölbasierten Invert-Spülsystemen entsprechen, gleichwohl aber den zusätzlichen Vorteil der erhöhten Umweltverträglichkeit besitzen. Zwei wesentliche Erkenntnisse beherrschen dabei die erfindungsgemäße Lehre:

Für den Aufbau von mineralölfreien ölbasischen Invert-Spülungen sind die in Form natürlicher Öle anfallenden Triglyceride nicht geeignet, brauchbar sind jedoch die sich aus diesen Ölen bzw. Fetten ableitenden Ester der monofunktionellen Carbonsäuren mit monofunktionellen Alkoholen. Die zweite wesentliche Erkenntnis ist, daß sich Esteröle der hier betroffenen Art im Einsatz tatsächlich nicht gleich verhalten wie die bisher verwendeten Mineralölfraktionen auf reiner Kohlenwasserstoffbasis. Die hier betroffenen Esteröle aus monofunktionellen Komponenten unterliegen im praktischen Einsatz einer partiellen Hydrolyse. Hierdurch werden freie Fettsäuren gebildet. Diese wiederum reagieren mit den in Bohrspülsystemen der hier betroffenen Art stets vorliegenden alkalischen Bestandteilen - z. B. mit der zum Korrosionsschutz eingesetzten Alkalireserve - zu den entsprechenden Salzen. Salze aus stark hydrophilen Basen und den in Fetten bzw. Ölen natürlichen Ursprungs überwiegend anzutreffenden Säuren einer Kettenlänge bis etwa $C_{24}$ - und hier insbesondere die längerkettigen Säuren von etwa $C_{16}$ bis $C_{22}$ - sind aber bekanntlich Verbindungen mit vergleichsweise hohen HLB-Werten, die insbesondere zur Einstellung und Stabilisierung von O/W-Emulsionen führen. Die Wasch- und Reinigungstechnik macht hiervon bekanntlich in größtem Umfange Gebrauch. Die Bildung unerwünscht großer Mengen solcher O/W-Emulgatorsysteme muß aber mit den im Sinne der erfindungsgemäßen Zielsetzung geforderten W/O-Emulsionen interferieren und damit zu Störungen führen. Die im nachfolgenden geschilderte Lehre der Erfindung beschreibt, wie trotz dieser systemimmanenten Schwierigkeiten in der Praxis verwertbare Invert-Bohrspülungen auf Basis von Esterölen Verwendung finden können.

Gegenstand der Erfindung ist dementsprechend in einer ersten Ausführungsform die Verwendung ausgewählter im Temperaturbereich von 0 bis 5 °C fließ- und pumpfähiger Ester aus monofunktionellen Alkoholen mit 2 bis 12, insbesondere 4 bis 12 C-Atomen und aliphatich gesättigten Monocarbonsäuren mit 12 bis 16 C-Atomen als Ölphase oder wenigstens überwiegender Anteil der Ölphase von Invert-Bohrspülschlämmen, die in einer geschlossenen Ölphase eine disperse wäßrige Phase zusammen mit Emulgatoren, Beschwerungsmitteln, fluid-loss-Additiven, Viskositätsbildnern und gewünschtenfalls weiteren üblichen Zusatzstoffen enthalten.

In einer weiteren Ausführungsform betrifft die Erfindung mineralölfreie Invert-Bohrspülungen, die für die off-shore-Erschließung von Erdöl- bzw. Erdgasvorkommen geeignet sind und in einer geschlossenen Ölphase auf Basis von Esterölen eine disperse wäßrige Phase zusammen mit Emulgatoren, Verdickern, Beschwerungsmitteln, fluid-loss-Additiven und gewünschtenfalls weiteren üblichen Zusatzstoffen enthalten, wobei das Kennzeichen der Erfindung darin liegt, daß die Ölphase zum wenigstens überwiegenden Anteil aus Estern monofunktioneller Alkohole mit 2 bis 12 C-Atomen und aliphatisch gesättigten Monocarbonsäuren mit 12 bis 16 C-Atomen gebildet ist. Gemäß einem bevorzugten Element der Erfindung weisen diese Esteröle der geschlossenen Ölphase im Temperaturbereich von 0 bis 5 °C eine Brookfield(RVT)-Viskosität nicht oberhalb 50 mPas auf.

In diesen beiden hier geschilderten Ausführungsformen der Erfindung werden in einer besonders bevorzugten Ausführungsform Esteröle verwendet, die zum wenigstens überwiegenden Anteil, d. h. also zu wenigstens etwa 50 bis 51 % auf aliphatische $C_{12-14}$-Monocarbonsäuren zurückgehen, wobei solche Esteröle besonders geeignet sein können, die zu wenigstens etwa 60 Gew. -% - bezogen auf das jeweils vorliegende Carbonsäuregemisch - Ester solcher aliphatischer $C_{12-14}$-Monocarbonsäuren sind.

In einer wichtigen Ausführungsform liegen im Esteröl ausschließlich gesättigte aliphatische Monocarbonsäuren des genannten breiteren Bereichs von $C_{12-16}$, insbesondere aber des Bereichs $C_{12-14}$ vor. Die Erfindung ist darauf jedoch nicht eingeschränkt. Die Mitverwendung von Estern anderer Carbonsäuren in höchstens etwa gleicher Menge und bevorzugt in untergeordneten Mengen kann vorteilhaft sein. In Betracht kommen hier insbesondere kürzerkettige aliphatische Monocarbonsäuren bzw. ihre Ester und/oder Ester längerkettiger Carbonsäuren. In diesem zuletzt genannten Fall der Mitverwendung von Estern längerkettiger Carbonsäuren ist dann allerdings die wenigstens anteilsweise Verwendung entsprechender ein- und/oder mehrfach olefinisch ungesättigter längerkettiger Carbonsäurederivate bevorzugt. In Betracht kommen in dieser Ausführungsform als Mischungskomponenten vor allem ein- und/oder mehrfach olefinisch ungesättigte Monocarbonsäureester

EP 0 374 672 B1

des Bereichs $C_{16-24}$, insbesondere $C_{18-22}$.

Gemäß einem weiteren wichtigen und im nachfolgenden ausführlicher diskutierten bevorzugten Element der Erfindung wird beim Einsatz der hier definierten Esteröle auf die Mitverwendung wesentlicher Mengen an starken hydrophilen Basen wie Alkalihydroxid und/oder Diethanolamin in der fertigen Invert-Bohrspülung verzichtet.

Invert-Bohrspülungen mit einer geschlossenen Ölphase des Standes der Technik enthalten bekanntlich stets eine Alkalireserve, insbesondere zum Schutz gegen Einbrüche von $CO_2$ und/oder $H_2S$ in die Bohrspülung und damit zum Schutz vor Korrosion an den Metallteilen des Bohrgestänges. Eine brauchbare Alkalireserve ist im Rahmen des erfindungsgemäßen Handelns der Zusatz von Kalk (Calciumhydroxid bzw. lime) oder die Mitverwendung von schwächerbasischen Metalloxiden, beispielsweise von der Art des Zinkoxids und/oder anderer Zinkverbindungen. Einzelheiten zu diesen Elementen der erfindungsgemäßen Lehre werden im nachfolgenden noch ausführlicher dargestellt. Zunächst wird auf die erfindungsgemäß ausgewählten Esteröle eingegangen, die bestimmungsgemäß ausschließlich oder wenigstens überwiegend die geschlossene Ölphase der Invert-Bohrschlämme bilden.

Die erfindungsgemäß eingesetzten Esteröle aus monofunktionellen Alkoholen und ausgewählten Monocarbonsäuren können sich von unverzweigten oder verzweigten Kohlenwasserstoffketten ableiten. Den Estern entsprechender geradkettiger Säuren kommt besondere Bedeutung zu. Gesättigte Monocarbonsäuren des Bereichs von $C_{12-16}$ und insbesondere des Bereichs von $C_{12-14}$ können mit monofunktionellen Alkoholen der erfindungsgemäß definierten Kohlenstoffzahl Esteröle bilden, die hinreichende rheologische Eigenschaften selbst herunter bis zu Temperaturen im Bereich von 0 bis 5 °C zeigen und in diesem Temperaturbereich insbesondere fließ- und pumpfähig sind. Bevorzugte Ester für die Ölphase von Bohrschlämmen sind im Sinne des erfindungsgemäßen Handelns gesättigte Komponenten, die im Temperaturbereich von 0 bis 5 °C eine Brookfield(RVT)-Viskosität im Bereich nicht oberhalb 50 mPas und vorzugsweise nicht oberhalb 40 mPas besitzen. Durch Auswahl geeigneter Komponenten bei der Esterbildung ist es möglich, die Viskosität im genannten Temperaturbereich von 0 bis 5 °C auf Werte von höchstens etwa 30 mPas - beispielsweise im Bereich von etwa 10 bis 20 mPas - einzustellen. Es ist einleuchtend, daß sich hier wichtige Vorteile für das Arbeiten im marinen Bereich ergeben, in dem sehr niedrige Temperaturen des Umgebungswassers vorgegeben sein können.

Die erfindungsgemäß eingesetzten Esteröle auf Basis ausgewählter individueller Komponenten oder auf Basis von Estergemischen besitzen in der bevorzugten Ausführungsform Erstarrungswerte (Fließpunkt und Stockpunkt) unterhalb - 10 °C und insbesondere unterhalb - 15 °C. Trotz dieser hohen Beweglichkeit bei tiefen Temperaturen ist durch die erfindungsgemäß vorgeschriebene Molekülgröße des Esteröls sichergestellt, daß dessen Flammpunkte hinreichend hohe Werte haben. Sie liegen bei mindestens 80 °C, überschreiten jedoch im allgemeinen die Temperaturgrenze von etwa 100 °C. Bevorzugt werden Esteröle, die Flammpunkte oberhalb 150 °C bis 160 °C besitzen, wobei Esteröle der geschilderten Art hergestellt werden können, deren Flammpunkte bei 185 °C oder höher liegen.

In einer weiteren wichtigen Ausführungsform gehen die Esteröle des erfindungsgemäß geforderten Bereichs für die gesättigten Monocarbonsäuren $C_{12-16}$ auf Materialien überwiegend pflanzlichen Ursprungs zurück. Carbonsäuren bzw. Carbonsäuregemische mit einem überwiegenden Gehalt gesättigter Monocarbonsäuren des angegebenen Bereichs können beispielsweise aus nachwachsenden Triglyceriden wie Kokosöl, Palmkernöl und/oder Babassuöl gewonnen werden. Fettsäuregemische dieses Ursprungs enthalten in der Regel eine beschränkte Menge an niederen Fettsäuren ($C_{6-10}$), die im allgemeinen bei maximal etwa 15 % liegt. Weitaus überwiegend ist ihr Gehalt an $C_{12/14}$-Säuren, der in der Regel mindestens 50 %, üblicherweise 60 % oder mehr des Carbonsäuregemisches ausmacht. Der verbleibende untergeordnete Rest entfällt auf höhere Fettsäuren, wobei in diesem Bereich ungesättigten Komponenten eine beträchtliche Rolle zukommt. Carbonsäuregemische dieser Art führen also schon aufgrund ihrer von der Natur vorgegebenen Struktur leicht zu Materialien mit befriedigenden rheologischen Eigenschaften.

Als Mischungskomponenten ebenfalls natürlichen Ursprungs kommen in einer Ausführungsform der Erfindung insbesondere monofunktionelle Esteröle in Betracht, wie sie in der parallelen EP-A1-0 374 671 beschrieben sind. Im Sinne der hier betroffenen erfindungsgemäßen Lehre werden diese Mischungskomponenten dann allerdings bevorzugt in untergeordneten Mengen (maximal etwa 49 % bezogen auf das Esterölgemisch) eingesetzt. Zur Vervollständigung der Erfindungsbeschreibung wird diese Klasse der möglichen Mischungskomponenten kurz geschildert. Weiterführende Einzelheiten sind der genannten Parallelanmeldung zu entnehmen.

Bei diesen möglichen Mischungskomponenten handelt es sich um Ester monofunktioneller Alkohole mit 2 bis 12 C-Atomen und olefinisch 1 - und/oder mehrfach ungesättigten Monocarbonsäuren mit 16 bis 24 C-Atomen. Auch hier können sich die Carbonsäuren von unverzweigten oder verzweigten Kohlenwasserstoffketten

4

ableiten, wobei wiederum den geradkettigen Säuren besondere Bedeutung zukommt. Ester der hier betroffenen höheren Kettenlängen sind bis herunter zu Temperaturen im Bereich von 0 bis 5 °C fließ- und pumpfähig, wenn ein hinreichender Grad von olefinisch ungesättigten Esterbestandteilen sichergestellt ist. In der bevorzugten Ausführungsform werden dementsprechend Ester dieser Art als Mischungskomponente mitverwendet, die sich zu mehr als 70 Gew.-% und vorzugsweise zu mehr als 80 Gew.-% von olefinisch ungesättigten Carbonsäuren des Bereichs von $C_{16-24}$ ableiten. Wichtige natürliche Ausgangsmaterialien liefern Carbonsäuregemische, die zu wenigstens 90 Gew.-% olefinisch ungesättigte Carbonsäuren des hier genannten C-Bereichs enthalten. Die ungesättigten Carbonsäuren können dabei einfach und/oder mehrfach olefinisch ungesättigt sein. Beim Einsatz von Carbonsäuren bzw. Carbonsäuregemischen natürlichen Ursprungs spielt neben einer einfachen ethylenischen Doppelbindung im Molekül insbesondere die zweifache und im untergeordneten Maße auch noch eine dreifache ethylenische Doppelbindung je Carbonsäuremolekül eine gewisse Rolle.

Diese als Mischungskomponente eingesetzten Ester ungesättigter Monocarbonsäuren höherer C-Kettenzahl besitzen bevorzugt aus sich heraus Erstarrungswerte (Fließpunkt und Stockpunkt) unterhalb - 10 °C und insbesondere unterhalb - 15 °C. Aufgrund ihrer Molekülgröße liegen die Flammpunkte auch dieser Mischungskomponenten im gewünschten Bereich, d. h. mindestens oberhalb 80 °C, bevorzugt oberhalb 100 °C und insbesondere oberhalb 160 °C. Mischkomponenten dieser Art sollen in der bevorzugten Ausführungsform im Temperaturbereich von 0 bis 5 °C Brookfield(RVT)-Viskositäten nicht über 55 mPas und vorzugsweise Werte von höchstens 45 mPas aufweisen.

Im Rahmen dieser hoch ungesättigten Mischungskomponenten kommt zwei Unterklassen besondere Bedeutung zu.

Die erste dieser Unterklassen geht von ungesättigten $C_{16-24}$-Monocarbonsäuren aus, die zu nicht mehr als etwa 35 Gew.-% 2- und gegebenenfalls mehrfach olefinisch ungesättigt sind. Hier ist also der Gehalt an mehrfach ungesättigten Carbonsäureresten im Esteröl vergleichsweise beschränkt. Bevorzugt ist im Rahmen dieser Unterklasse dann allerdings, daß die Carbonsäurereste zu wenigstens etwa 60 Gew.-% einfach olefinisch ungesättigt sind.

In Abweichung von dieser ersten Unterklasse leitet sich die zweite für die Praxis bedeutende Unterklasse der hier als Mischungskomponente diskutierten Esteröle von solchen $C_{16-24}$-Monocarbonsäuregemischen ab, die zu mehr als 45 Gew.-% und dabei vorzugsweise zu mehr als 55 Gew. -% von 2- und/oder mehrfach olefinisch ungesättigten Säuren des genannten C-Zahlbereiches herleitbar sind.

Die wichtigsten ethylenisch einfach ungesättigten Carbonsäuren des hier betroffenen Bereichs sind die Hexadecensäure (Palmitoleinsäure, $C_{16}$), die Ölsäure ($C_{18}$), die ihr verwandte Rizinolsäure ($C_{18}$) und die Erucasäure ($C_{22}$). Die wichtigste zweifach ungesättigte Carbonsäure des hier betroffenen Bereichs ist die Linolsäure ($C_{18}$) und die wichtigste dreifach ethylenisch ungesättigte Carbonsäure die Linolensäure ($C_{18}$).

Als Mischungskomponente können ausgewählte Individuen des Ester-Typs ungesättigte Monocarbonsäure/Monoalkohol eingesetzt werden. Ein Beispiel hierfür sind etwa die Ester der Ölsäure, etwa von der Art des Ölsäureisobutylesters. Für die Rheologie des Systems und/oder aus Gründen der Zugänglichkeit ist es häufig wünschenswert, Säuregemische einzusetzen.

Pflanzenöle natürlichen Ursprungs, die bei ihrer Verseifung bzw. Umesterung Gemische von Carbonsäuren bzw. Carbonsäureester der zuvor angegebenen ersten Unterklasse liefern, sind beispielsweise Palmöl, Erdnußöl, Rizinusöl und insbesondere Rüböl. In Betracht kommen dabei sowohl Rübölsorten mit hohem Gehalt an Erucasäure als auch die moderneren Rübölzüchtungen mit verringertem Gehalt an Erucasäure und dafür erhöhtem Ölsäuregehalt.

Carbonsäuregemische der zuvor genannten zweiten Unterklasse sind im Rahmen natürlicher Fettstoffe pflanzlichen und/oder tierischen Ursprungs in breitem Umfang zugänglich. Klassische Beispiele für Öle mit hohem Gehalt an Carbonsäuren des Bereichs von $C_{16-18}$ bzw. $C_{16-22}$ und gleichzeitig wenigstens etwa 45 % an wenigstens zweifach ethylenisch ungesättigten Carbonsäuren sind das Baumwollsaatöl, das Sojaöl, das Sonnenblumenöl und das Leinöl. Auch die bei der Zellstoffgewinnung isolierten Tallölfettsäuren fallen in diesen Bereich. Ein typisches tierisches Einsatzmaterial für die Gewinnung entsprechender Carbonsäuregemische ist Fischöl, insbesondere Heringsöl.

Für die Auswahl der im Rahmen der vorliegenden Erfindung eingesetzten gesättigten Esteröle und insbesondere auch der zuletzt geschilderten Esterölgemische ist zu berücksichtigen, daß gesättigte Carbonsäureester des Bereichs $C_{16}$ und höherer C-Zahl vergleichsweise hochliegende Schmelzpunkte besitzen können und damit leicht rheologische Schwierigkeiten bereiten. Erfindungsgemäß kann es dementsprechend bevorzugt sein, daß in den Esterölen gesättigte Carbonsäurereste des Bereichs von $C_{16/18}$ und höherer C-Zahl zu nicht mehr als etwa 20 Gew.-% und insbesondere zu nicht mehr als etwa 10 Gew.-% vorliegen.

Unbedenklicher ist dagegen das Vorliegen gesättigter Carbonsäurereste des C-Zahlbereichs unterhalb $C_{12}$. Hier können im Gegenteil wertvolle Mischungskomponenten für die erfindungsgemäß gewählten Esterölphasen vorliegen. Ihre Ester sind unter den praktischen Einsatzbedingungen ebenso wenig oxidationsanfällig, wie die erfindungsgemäß vorgesehenen gesättigten Hauptkomponenten des Bereichs von insbesondere $C_{12/14}$. Die rheologischen Eigenschaften der niederen Fettsäureester begünstigen die erfindungsgemäße Zielsetzung, die bisher in der Praxis allein verwendeten reinen Kohlenwasserstofföle wenigstens anteilsweise, vorzugsweise überwiegend oder gar vollständig durch Esteröle bzw. Esterölfraktionen zu ersetzen.

Die Alkoholreste der Ester bzw. Estergemische im Sinne der erfindungsgemäßen Lehre leiten sich bevorzugt von geradkettigen und/oder verzweigtkettigen gesättigten Alkoholen ab, wobei besondere Bedeutung Alkoholen mit wenigstens 4 C-Atomen und insbesondere Alkoholen des Bereichs bis etwa $C_{10}$ zukommt. Die Alkohole können dabei ebenfalls natürlichen Ursprungs sein und sind dann üblicherweise aus den entsprechenden Carbonsäuren bzw. ihren Estern durch hydrierende Reduktion gewonnen worden.

Die Erfindung ist allerdings keineswegs auf Einsatzmaterialien natürlichen Ursprungs eingeschränkt. Sowohl auf der Seite der Monoalkohole wie auf der Seite der Monocarbonsäuren können statt der Einsatzmaterialien natürlichen Ursprungs anteilsweise oder vollständig entsprechende Komponenten synthetischen Ursprungs verwendet werden. Typische Beispiele für Alkohole sind die entsprechenden Oxoalkohole (verzweigt) bzw. die nach dem Ziegler-Verfahren gewonnenen linearen Alkohole. Ebenso können insbesondere in Carbonsäuregemischen vorliegende Monocarbonsäurekomponenten aus der petrochemischen Synthese abgeleitet sein. Vorteilhaftes liegt allerdings in den Einsatzmaterialien natürlichen Ursprungs vor allem in den nachgewiesenen niederen toxikologischen Werten, der leichten Abbaubarkeit und der leichten Zugänglichkeit. Für die letztlich gewünschte Vernichtung der gebrauchten Ölspülung auf natürlichem Wege ist es von Bedeutung, daß sich Esteröle der hier beschriebenen Art sowohl auf aerobem wie auf anaerobem Weg abbauen lassen.

Ein wichtiger zusätzlicher Gesichtspunkt ist allerdings bei der Verwendung solcher Esteröle als alleiniger oder überwiegender Bestandteil in Invert-Ölschlämmen der hier betroffenen Art zu berücksichtigen. Hierbei handelt es sich um die eingangs geschilderte Schwierigkeit, daß die Carbonsäureester prinzipiell hydrolyseanfällig sind und sich dementsprechend anders verhalten müssen als die bisher eingesetzten reinen hydrolyseresistenten Kohlenwasserstofföle.

Invert-Bohrspülschlämme der hier betroffenen Art enthalten üblicherweise zusammen mit der geschlossenen Ölphase die feindisperse wäßrige Phase in Mengen von etwa 5 bis 45 Gew.-% und vorzugsweise in Mengen von etwa 5 bis 25 Gew.-%. Dem Bereich von etwa 10 bis 25 Gew.-% an disperser wäßriger Phase kann besondere Bedeutung zukommen. Diese Vorbedingung aus der Konstitution konventioneller Bohrspülungen gilt auch für die hier betroffenen Invert-Spülungen auf Esterbasis. Es leuchtet ein, daß im kontinuierlichen praktischen Betrieb Störungen des Gleichgewichts im Mehrphasensystem auftreten können, die durch eine partielle Esterverseifung bedingt sind.

Erschwert wird die Situation dadurch, daß Bohrspülungen der hier betroffenen Art in der Praxis stets eine Alkalireserve enthalten. Eine wichtige Bedeutung hat diese Alkalireserve als Korrosionsschutz gegen unerwartete Einbrüche saurer Gase, und zwar insbesondere $CO_2$ und/oder $H_2S$. Die Korrosionsproblematik am Bohrgestänge fordert die sichere Einstellung von pH-Werten wenigstens im schwach alkalischen Bereich, beispielsweise auf pH 8,5 bis 9 und höhere Werte.

In Ölspülungen auf Basis reiner Kohlenwasserstofffraktionen als Ölphase werden in der Praxis im allgemeinen ohne Bedenken stark alkalische und dabei stark hydrophile Zusatzstoffe anorganischer oder organischer Art eingesetzt. Besondere Bedeutung kann dabei den Alkalihydroxiden und hier insbesondere dem Natriumhydroxid einerseits oder stark hydrophilen organischen Basen zukommen, wobei Diethanolamin und/oder Triethanolamin besonders übliche Zusatzmittel zum Abfangen von $H_2S$-Verunreinigungen sind. Neben und/oder anstelle der hier genannten stark hydrophilen anorganischen und organischen Basen kommt dem Kalk (Calciumhydroxid bzw. lime) oder auch noch schwächerbasischen Metalloxiden, insbesondere dem Zinkoxid und anderen Zinkverbindungen als Alkalireserve beträchtliche Bedeutung zu. Gerade Kalk als billiges Alkalisierungsmittel wird in großem Umfange eingesetzt. Dabei werden unbedenklich vergleichsweise hohe Mengen verwendet, die beispielsweise bei 5 bis 10 lb/bbl (Kalk/Ölspülung) oder auch bei noch höheren Werten liegen.

Der Einsatz von Esterspülungen der hier beschriebenen Art fordert in der hier besprochenen Variablen gegebenenfalls eine Abkehr von der bisherigen Praxis. Natürlich muß auch hier sichergestellt sein, daß der pH-Wert der Bohrspülung im wenigstens schwach alkalischen Bereich gehalten wird und daß eine hinreichende Menge an Alkalireserve für unerwartete Einbrüche von insbesondere sauren Gasen zur Verfügung steht. Dabei wird jedoch darauf geachtet, daß durch einen solchen Alkaligehalt die Esterhydrolyse nicht in unerwünschter Weise gefördert und/oder beschleunigt wird.

So wird in der bevorzugten Ausführungsform des erfindungsgemäßen Handelns darauf geachtet, in der Ölspülung keine wesentlichen Mengen stark hydrophiler Basen anorganischer und/oder organischer Art mitzuverwenden. Insbesondere verzichtet die Erfindung auf die Mitverwendung von Alkalihydroxiden oder stark hydrophilen Aminen von der Art des Diethanolamins und/oder des Triethanolamins. Kalk kann wirkungsvoll als Alkalireserve mitverwendet werden. Es ist dann allerdings zweckmäßig, die maximal einzusetzende Kalk-

EP 0 374 672 B1

menge mit etwa 2 lb/bbl zu beschränken, wobei es bevorzugt sein kann, mit Bohrschlammbeladungen an Kalk zu arbeiten, die leicht darunter liegen, beispielsweise also im Bereich von etwa 1 bis 1,8 lb/bbl (Kalk/Bohrspülung) liegen. Neben oder anstelle des Kalks können andere Alkalireserven bekannter Art zum Einsatz kommen. Genannt seien hier insbesondere die weniger basischen Metalloxide von der Art des Zinkoxids. Auch bei dem Einsatz solcher Säurefänger wird allerdings darauf geachtet werden, keine zu großen Mengen einzusetzen, um eine unerwünschte vorzeitige Alterung der Bohrspülung - verbunden mit einem Viskositätsanstieg und damit Verschlechterung der rheologischen Eigenschaften - zu verhindern. Durch die hier diskutierte Besonderheit des erfindungsgemäßen Handelns wird das Entstehen unerwünschter Mengen an hoch wirksamen O/W-Emulgatoren verhindert oder wenigstens so eingeschränkt, daß die guten rheologischen Einsatzwerte auch bei der thermischen Alterung im Betrieb für hinreichend lange Zeit aufrechterhalten bleiben. Hier liegt gegenüber den bisher im Bereich theoretischer Überlegungen verbliebenen Empfehlungen des Standes der Technik ein entscheidender Überschuß, der die praktische Auswertung der niedrigen toxischen Eigenschaften hier betroffener Esteröle überhaupt erst möglich macht.

Die erfindungsgemäß definierten, im Temperaturbereich von 0 bis 5 °C fließ- und pumpfähigen Ester auf Basis der gesättigten Monocarbonsäuren mit 12 bis 16 C-Atomen machen in der geschlossenen Ölphase des Bohrschlamms im allgemeinen wenigstens etwa aus. Bevorzugt sind allerdings solche Ölphasen, die Ester der erfindungsgemäßen Art zum stark überwiegenden Anteil enthalten und in einer ganz besonders wichtigen Ausführungsform der Erfindung praktisch aus solchen Esterölen bestehen. Als Mischungskomponenten für die Abmischung mit den erfindungsgemäß definierten Esterölen eignen sich die in der parallelen EP-A1-0 374 671 beschriebenen Verbindungen. Die Erfindung umfaßt Abmischungen auch mit solchen ausgewählten anderen Esterölen.

Für die Rheologie bevorzugter Invert-Bohrspülungen im Sinne der Erfindung gelten die folgenden rheologischen Daten: Plastische Viskosität (PV) im Bereich von etwa 10 bis 60 mPas, bevorzugt von etwa 15 bis 40 mPas, Fließgrenze (Yield Point YP) im Bereich von etwa 5 bis 40 lb/100 ft$^2$, bevorzugt von etwa 10 bis 25 lb/100 ft$^2$ - jeweils bestimmt bei 50 °C. Für die Bestimmung dieser Parameter, für die dabei eingesetzten Meßmethoden sowie für die im übrigen übliche Zusammensetzung der hier beschriebenen Invert-Bohrölspülungen gelten im einzelnen die Angaben des Standes der Technik, die eingangs zitiert wurden und ausführlich beispielsweise beschrieben sind in dem Handbuch "Manual Of Drilling Fluids Technology" der einen Anmelderin BAROID DRILLING FLUIDS, INC., dort insbesondere unter Kapitel "Mud Testing - Tools and Techniques" sowie "Oil Mud Technology", das der interessierten Fachwelt frei zugänglich ist. Zusammenfassend kann hier zum Zwecke der Vervollständigung der Erfindungsoffenbarung das folgende gesagt werden:

Für die Praxis brauchbare Emulgatoren sind Systeme, die zur Ausbildung der geforderten W/O-Emulsionen geeignet sind. In Betracht kommen insbesondere ausgewählte oleophile Fettsäuresalze, beispielsweise solche auf Basis von Amidoaminverbindungen. Beispiele hierfür werden in der bereits zitierten US-PS 4,374,737 und der dort zitierten Literatur beschrieben. Ein besonders geeigneter Emulgatortyp ist das von der Anmelderin BAROID DRILLING FLUIDS, INC. unter dem Handelsnamen "EZ-mul" vertriebene Produkt. Emulgatoren der hier betroffenen Art werden im Handel als hochkonzentrierte Wirkstoffaufbereitungen vertrieben und können beispielsweise in Mengen von etwa 2,5 bis 5 Gew.-%, insbesondere in Mengen von etwa 3 bis 4 Gew.-% - jeweils bezogen auf Esterölphase - Verwendung finden.

Als fluid-loss-Additiv und damit insbesondere zur Ausbildung einer dichten Belegung der Bohrwandungen mit einem weitgehend flüssigkeitsundurchlässigen Film wird in der Praxis insbesondere organophiler Lignit eingesetzt. Geeignete Mengen liegen beispielsweise im Bereich von etwa 15 bis 20 lb/bbl oder im Bereich von etwa 5 bis 7 Gew.-% - bezogen auf die Esterölphase.

In Bohrspülungen der hier betroffenen Art ist der üblicherweise eingesetzte Viskositätsbildner ein kationisch modifizierter organophiler feinteiliger Bentonit, der insbesondere in Mengen von etwa 8 bis 10 lb/bbl oder im Bereich von etwa 2 bis 4 Gew.-%, bezogen auf Esterölphase, verwendet werden kann. Das in der einschlägigen Praxis üblicherweise eingesetzte Beschwerungsmittel zur Einstellung des erforderlichen Druckausgleiches ist Baryt, dessen Zusatzmengen den jeweils zu erwartenden Bedingungen der Bohrung angepaßt werden. Es ist beispielsweise möglich, durch Zusatz von Baryt das spezifische Gewicht der Bohrspülung auf Werte im Bereich bis etwa 2,5 und vorzugsweise im Bereich von etwa 1,3 bis 1,6 zu erhöhen.

Die disperse wäßrige Phase wird in Invert-Bohrspülungen der hier betroffenen Art mit löslichen Salzen beladen. Überwiegend kommt hier Calciumchlorid und/oder Kaliumchlorid zum Einsatz, wobei die Sättigung der wäßrigen Phase bei Raumtemperatur mit dem löslichen Salz bevorzugt ist.

Die zuvor erwähnten Emulgatoren bzw. Emulgatorsysteme dienen gegebenenfalls auch dazu, die Ölbenetzbarkeit der anorganischen Beschwerungsmaterialien zu verbessern. Neben den bereits genannten Aminoamiden sind als weitere Beispiele Alkylbenzolsulfonate sowie Imidazolinverbindungen zu nennen. Zusätzliche Angaben zum einschlägigen Stand der Technik finden sich in den folgenden Literaturstellen: GB 2 158 437, EP 229 912 und DE 32 47 123.

7

Die erfindungsgemäß auf der Mitverwendung von Esterölen der geschilderten Art aufgebauten Bohrspülflüssigkeiten zeichnen sich zusätzlich zu den bereits geschilderten Vorteilen auch durch eine deutlich verbesserte Schmierfähigkeit aus. Wichtig ist das insbesondere dann, wenn bei Bohrungen beispielsweise in größeren Tiefen der Gang des Bohrgestänges und damit auch das Bohrloch Abweichungen von der Senkrechten aufweisen. Das rotierende Bohrgestänge kommt hier leicht mit der Bohrlochwand in Kontakt und gräbt sich im Betrieb in diese ein. Esteröle der erfindungsgemäß als Ölphase eingesetzten Art besitzen eine deutlich bessere Schmierwirkung als die bisher verwendeten Mineralöle. Hier liegt ein weiterer wichtiger Vorteil für das erfindungsgemäße Handeln.

**Beispiele**

Als Esteröl für die Ausbildung der geschlossenen Ölphase wird in den nachfolgenden Beispielen 1 und 2 sowie den Vergleichsbeispielen 1 und 2 destillierter Laurinsäure/n-Hexyl-Ester eingesetzt. Es handelt sich hierbei um eine weißlich-gelbe Flüssigkeit mit einem Flammpunkt oberhalb 165 °C, einem Fließpunkt unterhalb - 5 °C, einer Dichte (20 °C) von 0,857 bis 0,861, einer Jodzahl und einer Säurezahl jeweils unter 1, einem Wassergehalt unterhalb 0,3 % und den folgenden Viskositätsdaten (Brookfield mPas) im Tieftemperaturbereich:
- 5 °C 22,5 bis 25,5; + 2 °C 15 bis 18; + 5 °C 15 bis 18; + 10 °C ca. 15; 20 °C 12 bis 14

Beispiel 1

In an sich bekannter Weise wird aus den nachfolgend aufgeführten Komponenten eine W/O-Invert-Bohrspülung zusammengestellt, und dann werden am ungealterten und am gealterten Material die Viskositätskennwerte wie folgt bestimmt:

Messung der Viskosität bei 50 °C in einem Fann-35-Viskosimeter der Fa. BAROID DRILLING FLUIDS, INC.. Es werden in an sich bekannter Weise bestimmt die Plastische Viskosität (PV), die Fließgrenze (YP) sowie die Gelstärke (lb/100 ft$^2$) nach 10 sec. und 10 min.

Die Messungen werden sowohl am ungealterten Material wie an dem gealterten Material durchgeführt, wobei die Alterung durch Behandlung für den Zeitraum von 16 h bei 125 °C im Autoklaven - im sogenannten Roller-Oven - erfolgt.

Die folgende Zusammensetzung der Bohrspülung wird gewählt:

| | |
|---|---|
| 230 ml | Esteröl |
| 26 ml | Wasser |
| 6 g | organophiler Bentonit (GELTONE der Fa. BAROID DRILLING FLUIDS, INC.) |
| 6 g | organophiler Lignit (DURATONE der Fa. BAROID DRILLING FLUIDS, INC.) |
| 1 g | Kalk |
| 6 g | W/O-Emulgator (EZ-MUL der Fa. BAROID DRILLING FLUIDS, INC.) |
| 346 g | Baryt |
| 9,2 g | $CaCl_2$ x 2 $H_2O$ |

In dieser Rezeptur entsprechen etwa 1,35 g Kalk dem Grenzwert von 2 lb/bbl.

Die am ungealterten und am gealterten Material bestimmten Kennzahlen wie zuvor angegeben, sind in der nachfolgenden tabellarischen Zusammenfassung aufgeführt.

|  | ungealtertes Material | gealtertes Material |
| --- | --- | --- |
| Plastische Viskosität (PV) | 28 | 28 |
| Fließgrenze (YP) | 11 | 14 |
| Gelstärke (lb/100 ft$^2$) | | |
| 10 sec. | 5 | 6 |
| 10 min. | 7 | 8 |

Vergleichsbeispiel 1

Die Invert-Bohrspülung des Beispiels 1 wird in gleichen Mengenanteilen zusammengestellt. Jetzt wird jedoch der Kalkgehalt auf die dreifache Menge (3 g) erhöht.

Die am ungealterten und am gealterten Material bestimmten Kennzahlen sind in der nachfolgenden Zusammenfassung zusammengestellt:

|  | ungealtertes Material | gealtertes Material |
| --- | --- | --- |
| Plastische Viskosität (PV) | 31 | 72 |
| Fließgrenze (YP) | 8 | 59 |
| Gelstärke (lb/100 ft$^2$) | | |
| 10 sec. | 5 | 13 |
| 10 min. | 7 | 74 |

Beispiel 2

Es wird mit dem gleichen Esteröl eine besonders hoch beschwerte Invert-Bohrspülung gemäß der folgenden Rezeptur zusammengestellt:

| 184 ml | Esteröl |
| --- | --- |
| 10 ml | Wasser |
| 2 g | organophiler Bentonit (GELTONE der Fa. BAROID DRILLING FLUIDS, INC.) |
| 20 g | organophiler Lignit (DURATONE der Fa. BAROID DRILLING FLUIDS, INC.) |
| 1 g | Kalk |
| 10 g | W/O-Emulgator (EZ-MUL der Fa. BAROID DRILLING FLUIDS, INC.) |
| 568 g | Baryt |
| 4,8 g | $CaCl_2 \times 2\ H_2O$ |

Wie in Beispiel 1 werden die Materialkennzahlen am ungealterten und am gealterten Material bestimmt. Die ermittelten Werte sind in der nachfolgenden tabellarischen Zusammenfassung zusammengestellt:

|  | ungealtertes Material | gealtertes Material |
|---|---|---|
| Plastische Viskosität (PV) | 20 | 81 |
| Fließgrenze (YP) | 12 | 16 |
| Gelstärke (lb/100 ft$^2$) |  |  |
| 10 sec. | 8 | 8 |
| 10 min. | 10 | 11 |

In dieser Rezeptur entsprechen etwa 1,04 g Kalk dem Grenzwert von 2 lb/bbl.

Vergleichsbeispiel 2

Die hoch beschwerte Rezeptur des Beispiels 2 wird erneut zusammengestellt. Jetzt wird jedoch der Kalkgehalt auf das Doppelte (2 g) angehoben.

Erneut werden die Kenndaten am ungealterten und gealterten Material bestimmt. Sie sind in der nachfolgenden Zusammenstellung aufgeführt:

|  | ungealtertes Material | gealtertes Material |
|---|---|---|
| Plastische Viskosität (PV) | 78 | 73 |
| Fließgrenze (YP) | 37 | 59 |
| Gelstärke (lb/100 ft$^2$) |  |  |
| 10 sec. | 12 | 18 |
| 10 min. | 16 | 27 |

In den nachfolgenden Beispielen 3 und 4 wird als Esteröl für die Ausbildung der geschlossenen Ölphase ein Estergemisch aus im wesentlichen gesättigten Fettsäuren auf Basis Palmkern und 2-Ethylhexanol eingesetzt, das zum weitaus überwiegenden Teil auf $C_{12/14}$-Fettsäuren zurückgeht und der folgenden Spezifikation entspricht:

$C_8$: 3,5 bis 4,5 Gew.-%
$C_{10}$: 3,5 bis 4,5 Gew.-%
$C_{12}$: 65 bis 70 Gew.-%
$C_{14}$: 20 bis 24 Gew.-%
$C_{16}$: ca. 2 Gew.-%
$C_{18}$: 0,3 bis 1 Gew.-%

Das Estergemisch liegt als hellgelbe Flüssigkeit mit einem Flammpunkt oberhalb 165 °C, einem Fließpunkt unterhalb - 10 °C, einer Dichte (20 °C) von 0,86 und einer Säurezahl unterhalb 0,3 vor. Im Tieftemperaturbereich zeigt das Estergemisch die nachfolgenden Viskositätsdaten (Brookfield mPas):

- 5 °C 20 bis 22; 0 °C 16 bis 18; + 5 °C 13 bis 15; + 10 °C ca. 11; 20 °C 7 bis 9

Beispiel 3

Wie in den vorhergehenden Beispielen beschrieben, wird aus den nachfolgend aufgeführten Komponenten eine W/O-Invert-Bohrspülung zusammengestellt und dann am ungealterten und am gealterten Material die Viskositätskennwerte bestimmt.

Dabei wird die folgende Zusammensetzung der Bohrspülung gewählt:

| | |
|---|---|
| 230 ml | Esteröl |
| 6 g | Emulgator 1 (INVERMUL NT der einen Anmelderin (Baroid)) |
| 26 g | Wasser |
| 6 g | organophiler Bentonit (GELTONE) |
| 12 g | organophiler Lignit (DURATONE) |
| 1,5 g | Kalk |
| 6 g | Emulgator 2 (EZ-MUL) |
| 346 g | Baryt |
| 9,2 g | $CaCl_2$ x 2 $H_2O$ |

Die am ungealterten und am gealterten Material bestimmten Kennzahlen sind in der nachfolgenden tabellarischen Zusammenfassung aufgeführt.

| | ungealtertes Material | gealtertes Material |
|---|---|---|
| Plastische Viskosität (PV) | 37 | 30 |
| Fließgrenze (YP) | 16 | 14 |
| Gelstärke (lb/100 $ft^2$) | | |
| 10 sec. | 7 | 5 |
| 10 min. | 10 | 9 |

Beispiel 4

Eine 40 % Wasser enthaltende W/O-Invert-Bohrspülung wird unter Einsatz des zuletzt beschriebenen Esteröls gemäß der folgenden Rezeptur zusammengestellt:

| | |
|---|---|
| 350 ml | Esteröl |
| 20 g | Emulgator (EZ-MUL) |
| 8 g | organophiler Lignit (DURATONE) |
| 4 g | Kalk |
| 6 g | organophiler Bentonit (GELTONE) |
| 234 ml | Wasser |
| 99 g | $CaCl_2$ x 2 $H_2O$ |
| 150 g | Baryt |

Die am ungealterten und am gealterten Material bestimmten Kennzahlen zur Plastischen Viskosität und zur Fließgrenze sind die folgenden:

| | ungealtertes Material | gealtertes Material |
|---|---|---|
| Plastische Viskosität (PV) | 33 | 32 |
| Fließgrenze (YP) | 77 | 56 |

EP 0 374 672 B1

**Patentansprüche**

1. Verwendung ausgewählter im Temperaturbereich von 0 bis 5 °C fließ- und pumpfähiger Ester aus monofunktionellen Alkoholen mit 2 bis 12, insbesondere 4 bis 12 C-Atomen und aliphatisch gesättigten Monocarbonsäuren mit 12 bis 16 C-Atomen als Ölphase oder wenigstens überwiegender Anteil der Ölphase von Invert-Bohrspülschlämmen, die für eine umweltschonende off-shore-Erschließung von Erdöl- bzw. Erdgasvorkommen geeignet sind und in einer geschlossenen Ölphase eine disperse wäßrige Phase zusammen mit Emulgatoren, Beschwerungsmitteln, fluid-loss-Additiven, Viskositätsbildnern und gewünschtenfalls weiteren üblichen Zusatzstoffen enthalten.

2. Ausführungsform nach Anspruch 1, dadurch gekennzeichnet, daß Esteröle verwendet werden, die zu wenigstens etwa 60 Gew.-% - bezogen auf Carbonsäuregemisch - Ester aliphatischer $C_{12-14}$-Monocarbonsäuren sind und gewünschtenfalls zum Rest auf Ester kürzerkettiger aliphatischer und/oder längerkettiger, dann insbesondere 1-und/oder mehrfach olefinisch ungesättigter Monocarbonsäuren zurückgehen.

3. Ausführungsform nach Ansprüchen 1 und 2, dadurch gekennzeichnet, daß Esteröle in alkalisch gestellten Bohrspülungen mit einer Alkalireserve verwendet werden, wobei als Alkalireserve bevorzugt Kalk und/oder Metalloxide von der Art des Zinkoxids vorliegen.

4. Ausführungsform nach Ansprüchen 1 bis 3, dadurch gekennzeichnet, daß die Esteröle in Bohrspülungen verwendet werden, die Kalk als Alkalireserve in einer Menge von nicht mehr als etwa 2 lb/bbl (Kalk/Bohrspülung) enthalten.

5. Ausführungsform nach Ansprüchen 1 bis 4, dadurch gekennzeichnet, daß in der Ölphase von Bohrschlämmen Ester eingesetzt werden, die im Temperaturbereich von 0 bis 5 °C eine Brookfield(RVT)-Viskosität im Bereich nicht oberhalb 50 mPas, vorzugsweise nicht oberhalb 40 mPas und insbesondere von höchstens etwa 30 mPas besitzen.

6. Ausführungsform nach Ansprüchen 1 bis 5, dadurch gekennzeichnet, daß die im Bohrschlamm eingesetzten Ester Erstarrungswerte (Fließ- und Stockpunkt) unterhalb - 10 °C, vorzugsweise unterhalb - 15 °C und dabei Flammpunkte oberhalb 100 °C, vorzugsweise oberhalb 150 °C aufweisen.

7. Ausführungsform nach Ansprüchen 1 bis 6, dadurch gekennzeichnet, daß die im Ester bzw. Estergemisch vorliegenden Carbonsäuren wenigstens überwiegend geradkettig und dabei bevorzugt pflanzlichen Ursprungs sind und sich insbesondere von entsprechenden Triglyceriden wie Kokosöl, Palmkernöl und/oder Babassuöl ableiten.

8. Ausführungsform nach Ansprüchen 1 bis 7, dadurch gekennzeichnet, daß die Ester in Bohrspülungen zum Einsatz kommen, die im Invert-Bohrspülschlamm zusammen mit der geschlossenen Ölphase auf Esterbasis die fein-disperse wäßrige Phase in Mengen von etwa 5 bis 45 Gew.-%, vorzugsweise in Mengen von etwa 5 bis 25 Gew, -% enthalten.

9. Ausführungsform nach Ansprüchen 1 bis 8, dadurch gekennzeichnet, daß sich die Alkoholreste der eingesetzten Ester von geradkettigen und/oder verzweigten gesättigten Alkoholen mit vorzugsweise 4 bis 10 C-Atomen ableiten.

10. Ausführungsform nach Ansprüchen 1 bis 9, dadurch gekennzeichnet, daß auch die Alkoholkomponenten der eingesetzten Esteröle pflanzlichen und/oder tierischen Ursprungs und durch reduktive Hydrierung entsprechender Carbonsäureester gewonnen worden sind.

11. Mineralölfreie Invert-Bohrspülungen, die für die off-shore-Erschließung von Erdöl- bzw. Erdgasvorkommen geeignet sind und in einer geschlossenen Ölphase auf Basis Esteröle eine disperse wäßrige Phase zusammen mit Emulgatoren, Verdickern, Beschwerungsmitteln, fluid-loss-Additiven und gewünschtenfalls weiteren üblichen Zusatzstoffen enthalten, dadurch gekennzeichnet, daß die Ölphase zum wenigstens überwiegenden Anteil aus Estern monofunktioneller Alkohole mit 2 bis 12 C-Atomen und aliphatisch gesättigten Monocarbonsäuren mit 12 bis 16 C-Atomen gebildet ist, wobei diese Ester der Ölphase im Temperaturbereich von 0 bis 5 °C eine Brookfield(RVT)-Viskosität nicht oberhalb 50 mPas aufweisen.

12

**12.** Bohrspülung nach Anspruch 11, dadurch gekennzeichnet, daß die Invert-Bohrspülung leicht alkalisch gestellt ist und dabei eine Alkalireserve enthält, wobei jedoch bevorzugt auf den Einsatz starker hydrophiler Basen wie Alkalihydroxid oder stark hydrophiler Amine wie Diethanolamin verzichtet wird.

**13.** Bohrspülungen nach Ansprüchen 11 und 12, dadurch gekennzeichnet, daß als Alkalireserve Kalk und/oder Metalloxide von der Art des Zinkoxids vorliegen, wobei Kalkmengen im Bereich bis etwa 2 lb/bbl (Kalk/Bohrspülung) bevorzugt sind.

**14.** Bohrspülungen nach Ansprüchen 11 bis 13, dadurch gekennzeichnet, daß sie eine Plastische Viskosität (PV) im Bereich von etwa 10 bis 60 mPas und eine Fließgrenze (Yield Point YP) im Bereich von etwa 5 bis 40 lb/100 ft$^2$ - jeweils bestimmt bei 50 °C - aufweisen.

**15.** Bohrspülungen nach Ansprüchen 11 bis 14, dadurch gekennzeichnet, daß der disperse Wasseranteil etwa 5 bis 45 Gew. -%, bevorzugt etwa 5 bis 25 Gew. -% ausmacht und insbesondere Salze von der Art CaCl$_2$ und/oder KCl gelöst enthält.

**Claims**

**1.** Use of selected esters which are flowable and pumpable within the temperature range of from 0 °C to 5 °C of monofunctional alcohols having from 2 to 12, and in particular from 4 to 12, carbon atoms and aliphatically saturated monocarboxylic acids having from 12 to 16 carbon atoms as the oil phase or at least as a predominant part of the oil phase, of invert drilling muds suitable for an environmentally acceptable exploitation of off-shore natural oil and/or natural gas deposits, which drilling fluids contain, in a continuous oil phase, a dispersed aqueous phase together with emulsifiers, weighting agents, fluid-loss additives, viscosity improvers and optionally other common additives.

**2.** An embodiment according to claim 1, characterized in that ester oils are used of which at least about 60% by weight - based on the carboxylic acid mixture - are esters of aliphatic $C_{12-14}$-monocarboxylic acids, the reminder being derived, if so desired, from esters of aliphatic monocarboxylic acids having shorter chains and/or from carboxylic acids having longer chains which then especially are mono- and/or polyolefinically unsaturated.

**3.** An embodiment according to claims 1 and 2, characterized in that ester oils are used in alkalized drilling fluids containing an alkali reserve, lime and/or metal oxides of the zinc oxide being preferred to be present as the alkali reserve.

**4.** An embodiment according to claims 1 to 3, characterized in that the esters are used in drilling fluids which contain lime as an alkali reserve in an amount of not more than about 2 lb/bbl (lime/drilling fluid).

**5.** An embodiment according to claims 1 to 4, characterized in that esters are used in the oil phase of the drilling muds which esters have a Brookfield (RVT) viscosity in the temperature range of from 0 °C to 5 °C of not more than 50 mPa·s, and preferably of not more than 40 mPa·s and especially of at most about 30 mPa·s.

**6.** An embodiment according to claims 1 to 5, characterized in that the esters used in the drilling mud have solidification values (pour point and setting point) of below -10 °C, and preferably of below -15 °C, and at the same time exhibit flash points above 100 °C, and preferably above 150 °C.

**7.** An embodiment according to claims 1 to 6, characterized in that the carboxylic acids present in the ester or ester mixture are predominantly straight-chain and preferably are of vegetable origin and in particular are derived from corresponding triglycerides such as coconut oil, palm kernel oil and/or babassu oil.

**8.** An embodiment according to claims 1 to 7, characterized in that the esters are employed in drilling fluids which, in the invert drilling mud, contain the finely disperse aqueous phase in amounts of from about 5 to 45% by weight, and preferably from about 5 to 25% by weight, together with the continuous ester-based oil phase.

**9.** An embodiment according to claims 1 to 8, characterized in that the alcohol moieties of the esters employed are derived from straight-chain and/or branched-chain saturated alcohols having preferably from 4 to 10 carbon atoms.

10. An embodiment according to claims 1 to 9, characterized in that also the alcohol components of the ester oils used are of vegetable and/or animal origin and have been obtained by reductive hydrogenation of the corresponding carboxylic acid esters.

11. Mineral oil-free invert drilling fluids which are suitable for the off-shore development of natural oil and/or natural gas sources and, in a continuous phase based on ester oils, contain a disperse aqueous phase together with emulsifiers, thickeners, weighting agents, fluid-loss additives, and if desired further common additives, characterized in that the oil phase consists of at least a predominant proportion of esters of monofunctional alcohols having from 2 to 12 carbon atoms and aliphatically saturated monocarboxylic acids having from 12 to 16 carbon atoms, said esters of the oil phase having a Brookfield (RVT) viscosity of not higher than 50 mPa·s in the temperature range of from 0 °C to 5 °C.

12. A drilling fluid according to claim 11, characterized in that the invert drilling fluid has been mildly alkalized and, thus, contains an alkali reserve, whereas it is preferred not to use strongly hydrophilic bases such as alkali metal hydroxide or strongly hydrophilic amines such as diethanolamine.

13. Drilling fluids according to claims 11 and 12, characterized in that there are present lime and/or metal oxides of the zinc oxide type as alkali reserve, lime quantities within the range up to about 2 lb/bbl (lime/drilling fluid) being preferred.

14. Drilling fluids according to claims 11 to 13, characterized in that they have a plastic viscosity (PV) within the range of from about 10 to 60 mPa·s and a yield point (YP) within the range of from about 5 to 40 lb/100 ft$^2$ - each determined at 50 °C.

15. Drilling fluids according to claims 11 to 14, characterized in that the disperse water proportion comprises about from 5 to 45% by weight, and preferably about from 10 to 25% by weight and, more particularly, contains dissolved salts of the kind of CaCl$_2$ and/or KCl.

**Revendications**

1. Utilisation d'esters sélectionnés, fluides, et aptes au pompage dans la plage de températures allant de 0 à 5°C à base d'alcools monofonctionnels ayant de 2 à 12, en particulier de 4 à 12 atomes de carbone, et d'acides monocarboxyliques aliphatiques saturés ayant de 12 à 16 atomes de carbone, en tant que phase huileuse ou au moins fraction prépondérante, de la phase huileuse de boues d'injection de forage inversé qui conviennent pour la mise en exploitation off-shore qui ménage l'environnement, de gisements de pétrole ou de gaz naturel et qui contiennent dans une phase huileuse fermée une phase aqueuse dispersée ensemble avec des agents émulsionnants, des agents de lestage, des additifs de "perte de liquide", des agents formateurs de viscosité et si désiré d'autres substances additionnelles usuelles.

2. Mode d'exécution selon la revendication 1, caractérisé en ce que l'on utilise des huiles d'esters qui sont pour au moins environ 60 % en poids - rapporté au mélange d'acide carboxylique - des esters d'acide monocarboxylique aliphatique en C$_{12}$, C$_{14}$ et si désiré restituent au reste d'ester d'acides monocarboxyliques aliphatiques à chaîne courte et/ou à longue chaîne, puis en particulier d'acides insaturés en particulier une ou plusieurs fois oléfiniques.

3. Mode d'exécution selon les revendications 1 et 2, caractérisé en ce que les huiles d'esters sont utilisées dans des injections de forage, placées en milieu alcalin avec une réserve d'alcali, pour lesquelles comme réserve d'alcali, la chaux et/ou des oxydes métalliques du type de l'oxyde de zinc, de préférence, sont présents.

4. Mode d'exécution selon les revendications 1 à 3, caractérisé en ce que les huiles d'esters sont utilisées dans des inJections de forage qui renferment de la chaux comme réserve d'alcali en quantité qui n'est pas supérieure à environ 2 lb/bbl (chaux/injection de forage).

5. Mode d'exécution selon les revendications 1 à 4, caractérisé en ce que dans la phase huileuse des boues de forage, on met en oeuvre des esters qui possèdent dans la plage de températures de 0 à 5°C une viscosité Brookfield (RVT) qui ne dépasse pas 50 mPa.s, de préférence qui n'est pas au-dessus de 40 mPa.s et de préférence au maximum environ de 30 mPa.s.

6. Mode d'exécution selon les revendications 1 à 5, caractérisé en ce que les esters mis en oeuvre dans les boues de forage, possèdent des valeurs de solidification (point d'écoulement et point de durcissement) en-dessous de -10°C, de préférence en-dessous de -15°C et pour cela des points d'inflammation au-dessus de 100°C, de préférence au-dessus de 150°C.

7. Mode d'exécution selon les revendications 1 à 6, caractérisé en ce que les acides carboxyliques présents dans l'ester ou le mélange d'esters sont, au moins d'une manière prépondérante, à chaîne droite et pour cela d'une manière préférée d'origine végétale, et dérivent en particulier des triglycérides correspondants comme l'huile de coco, l'huile de noyau de palme et/ou de l'huile de Babassou.

8. Mode d'exécution selon les revendications 1 à 7, caractérisé en ce que les esters entrent en action dans les injections de forage qui renferment dans la boue d'injection de forage inversé ensemble avec la phase huileuse fermée, à base d'ester, la phase aqueuse finement dispersée en quantité allant environ de 5 à 45 % en poids, de préférence en quantité allant de 5 % environ à 25 % en poids.

9. Mode d'exécution selon les revendications 1 à 8, caractérisé en ce que les restes alcool des esters mis en oeuvre dérivent d'alcools à chaîne droite et/ou ramifiée, saturés, ayant de préférence de 4 à 10 atomes de carbone.

10. Mode d'exécution selon les revendications 1 à 9, caractérisé en ce que les composants alcooliques des huiles d'ester mises en oeuvre d'origine végétale et/ou animale et sont produits par hydrogénation réductrice des esters d'acide carboxylique correspondant.

11. Injections de forage inversé, dépourvues d'huile minérale, qui conviennent pour la mise en exploitation off-shore de gisements de pétrole ou de gaz naturel et qui contiennent dans une phase huileuse à base d'huiles d'ester une phase aqueuse dispersée ensemble avec des agents émulsionnants, des agents épaississants, des agents de lest, des additifs pour "pertes de liquide" et si désiré d'autres substances additionnelles habituelles, caractérisées en ce que la phase huileuse est formée d'au moins une fraction prépondérante d'alcools monofonctionnels ayant de 2 à 12 atomes de carbone et d'acides monocarboxyliques saturés aliphatiques ayant de 12 à 16 atomes de carbone, pour lesquels ces esters de la phase huileuse possèdent dans la plage de températures de 0 à 5°C une viscosité Brookfield (RVT) qui n'est pas au-dessus de 50 mPa.s.

12. Injection de forage selon la revendication 11, caractérisée en ce que l'injection de forage inversé est ajustée légèrement alcaline et pour cela renferme une réserve d'alcali pour laquelle cependant de préférence on renonce à la mise en oeuvre de bases fortes hydrophiles comme un hydroxyde alcalin ou d'amines fortes hydrophiles comme la diéthanolamine.

13. Injection de forage selon les revendications 11 et 12, caractérisées en ce que comme réserve d'alcali, la chaux et/ou des oxydes métalliques du type de l'oxyde de zinc sont présents, pour lesquels des quantités de chaux dans la plage allant jusqu'à environ 2 lb/bbl (chaux/injection de forage) sont préférées.

14. Injections de forage selon les revendications 11 à 13, caractérisées en ce qu'elles présentent une viscosité plastique (PV) dans la plage environ de 10 à 60 mPa.s et une limite d'écoulement [limite de résistance (YP)] dans la plage environ de 5 à 40 lb/100 ft$^2$ (4.788 x10$^3$Pa) respectivement déterminée à 50°C.

15. Injections de forage selon les revendications 11 à 14, caractérisées en ce que la fraction d'eau dispersée représente environ 5 à 45 % en poids, de préférence environ 5 à 25 % en poids et en particulier renferme des sels du type $CaCl_2$ et/ou KCl, dissouts.